# EUROPÄISCHE PATENTSCHRIFT

(11) **EP 1 126 235 B1**
(45) Veröffentlichungstag und Bekanntmachung des Hinweises auf die Patenterteilung: **28.04.2004**
(21) Anmeldenummer: 01103028.5
(22) Anmeldetag: 09.02.2001
(51) Int. Cl.: G01B 21/24, G01B 7/00, G01B 7/30

(54) **Verfahren und Vorrichtung zum Ermitteln der Ausrichtung eines drehbar gelagerten Körpers bezüglich einer Referenzrichtung**
Method and device for determining the orientation of a pivotable bearing body relative to a reference direction
Méthode et dispositif pour déterminer l'orientation d'un corps tournant sur palier relative à une direction de référence

(30) Priorität: 18.02.2000 DE 20002919 U; 09.08.2000 DE 20013709 U
(43) Veröffentlichungstag der Anmeldung: 22.08.2001
(73) Patentinhaber: Prüftechnik Dieter Busch AG, 85737 Ismaning (DE)
(72) Erfinder: Busch, Dieter, 85737 Ismaning (DE); Ambros, Helmut, 85258 Weichs (DE)

(56) Entgegenhaltungen:
- EP-A- 0 759 534
- EP-A- 0 928 951
- WO-A-96/01410
- US-A- 5 196 900
- PATENT ABSTRACTS OF JAPAN vol. 1997, no. 05, 30. Mai 1997 (1997-05-30) & JP 09 014918 A (ASIA ELECTRON INC), 17. Januar 1997 (1997-01-17)

## Beschreibung

Die vorliegende Erfindung betrifft ein Verfahren und eine Vorrichtung zum Ermitteln der Ausrichtung eines um eine Längsachse drehbar gelagerten Körpers, insbesondere einer Walze einer Druckmaschine, bezüglich einer Referenzrichtung.

Es ist vorgeschlagen worden, eine Druckmaschine zum Zwecke der Überprüfung ihrer Walzen so zu modifizieren, dass zu den Walzen gehörige Achsen oder Achsstücke mit einer hochplanen Stirnfläche oder einem hochpräzise gefertigten Adapter versehen werden, welcher in Verlängerung der Achsrichtung einer solchen Walze zeigt. An diesen Stirnflächen oder einem mit der Walze in Verbindung stehenden Adapter können dann mittels eines zweidimensional wirkenden und hochpräzise arbeitenden Winkelmessgerätes in Form eines optischen Kreisels die Komponenten der winkelmäßigen Ausrichtung der zu vermessenden Walze bezüglich einer Referenzrichtung bestimmt werden.

Ein Problem bei dieser Vorgehensweise besteht jedoch darin, dass es außerordentlich schwierig ist, die Stirnflächen oder den entsprechenden Adapter mit der erforderlichen Präzision herzustellen, wobei für die erforderliche Messgenauigkeit die genannten Flächen mit einer Oberflächengüte herzustellen sind, deren Rauhigkeitsmaß weiter unter einem Mikrometer liegen muss.

Eine andere Lösung zum Ermitteln der Ausrichtung von Körperachsen, relativ zueinander und auch zu einer Referenzrichtung, wird in der EP 0 928 951 vorgestellt. Die dort gezeigte Vorrichtung zeichnet sich durch eine gewisse Vielseitigkeit aus. Neben mechanischen Prismen, mit denen das Anlegen jener Vorrichtung an Zylindermäntel oder Längsseiten von Maschinen-Komponenten erleichtert wird, wird dort auch eine plane Anlegefläche mit Ausbruch oder Öffnung vorgesehen. Auf diese Weise können auch Stirnflächen von Gegenständen, speziell Oberflächen mit Unebenheiten wie z.B. Wellenenden, vermessen werden. Die Vermessung solcher Stirnflächen ist mit der dort gezeigten Vorrichtung allerdings problematisch. Dies beruht darauf, daß zwar eine zu einer Stirnfläche zugehörige Flächennormale ermittelt werden kann, aber eine solche Flächennormale aufgrund von Fertigungsfehlern nicht notwendigerweise parallel zu einer zugehörigen Körper-Längsachse liegen muß.

Es ist Aufgabe der vorliegenden Erfindung, ein Verfahren und eine Vorrichtung zum Ermitteln der Ausrichtung eines um seine Längsachse drehbar gelagerten Körpers zu schaffen, wodurch präzise Ausrichtungsmessungen auch an ungenau gefertigten Oberflächen an den Stirnflächen des Körpers oder einer dazu im wesentlichen parallelen Fläche ermöglicht werden.

Diese Aufgabe wird erfindungsgemäß gelöst durch ein Verfahren gemäß Anspruch 1 sowie eine Vorrichtung gemäss Anspruch 11. Bei dieser erfindungsgemäßen Lösung ist vorteilhaft, dass für eine präzise Ausrichtungsbestimmung weder eine besonders genau gefertigte Oberfläche an einer Stirnfläche des zylindrischen Körpers noch ein besonders genau gefertigter Adapter erforderlich sind, da eventuelle Fehlorientierungen der Lagemesssonde bezüglich der Längsachse des Körpers durch die Auswertung mehrerer Messstellungen deutlich verringert bzw. eliminiert werden können.

Vorzugsweise erfolgt die Befestigung der Lagemesssonde an der Stirnfläche bzw. der zu der Stirnfläche parallelen Fläche mittels magnetischer Kräfte.

Vorteilhafte Ausgestaltungen der Erfindung ergeben sich aus den abhängigen Ansprüchen.

Im Folgenden ist eine Ausführungsform der Erfindung anhand der beigefügten Zeichnungen näher erläutert, wobei:
Fig. 1 schematisch eine Seitenansicht einer erfindungsgemäßen Ausrichtungs-Ermittlungsvorrichtung in an einer zu vermessenden Walze befestigtem Zustand zeigt;
Fign. 2 bis 4 eine Frontansicht der Anordnung von Fig. 1 in verschiedenen Messstellungen zeigen; und
Fig. 5 eine beispielhafte Darstellung und Auswertung von Messergebnissen in der Anordnung von Fig. 1 bis 4 zeigt.

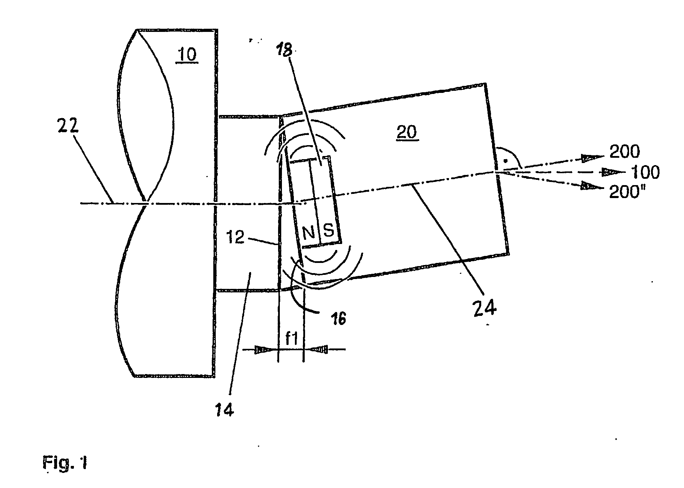

Gemäss Fig. 1 weist eine Walze 10 ein Achsstück 14 mit einer geschliffenen Stirnfläche 12 auf, an welche eine Lagemesssonde 20 angesetzt ist. Die Richtung der Längsachse der Walze 10 ist in Fig. 1 mit dem Bezugszeichen 100 bezeichnet. Aufgrund unvermeidlicher geometrischer Abweichungen der Stirnfläche 12 und der Ansetzfläche 16 der Sonde 20 von idealen Oberflächen, die in Fig. 1 durch das Fehlermaß f1 in stark übertriebener Darstellung angedeutet ist, ergibt sich eine Winkelabweichung der Orientierung der Achse 24 bzw. 200 der Lagemesssonde 20 bezüglich der Walzenachsrichtung 22 bzw. 100. Eine solche Abweichung tritt dabei im Regenfall in beiden zueinander und zu der Walzenachse 100 senkrechten Raumrichtungen auf.

Um eine feste, aber leicht lösbare Anbringung der Sonde 20 an der Stirnfläche 12 zu ermöglichen, ist die Sonde 20 mit einem hinreichend kräftigen Permanentmagneten 18 versehen, welcher sich innerhalb des Sondengehäuses befindet. Um eine kostengünstige Realisierung zu ermöglichen, ist der Permanentmagnet 18 vorzugsweise aus Neodym-Eisen-Bor-Werkstoff hergestellt. Auf diese Weise ist die Sonde 20 mit einem Magnetfuß oder Magnetadapter versehen.

Die Sonde 20 ist vorzugsweise mit drei optischen Kreiseln versehen, z.B. faseroptischen oder Laser-Kreiseln, die jeweils einen optischen Ring bilden, wobei jeder optische Kreisel eine Drehung um eine Achse senkrecht zu seiner Ringebene erfasst. Zweckmäßigerweise stehen die drei Ringebenen aufeinander senkrecht. Originär misst die Sonde 20 Drehungen um im Koordinatensystem der Sonde 20 ortsfeste Achsen, d.h. der Normalen zu jeder Ringebene. Als eigentliches Messergebnis liefert die Sonde jedoch nicht den jeweiligen Drehwinkel bzgl. dieser drei Achsen, sondern vielmehr den durch Koordinatentransformation berechneten jeweiligen Drehwinkel um drei im Laborkoordinatensystem, d.h. dem Koordinatensystem der Fabrikhalle, in welcher die zu vermessende Walze 10 gelagert ist, ortsfeste, zueinander senkrechte Achsen. Bezüglich dieser Achsen wird die Sonde 20 vor Beginn der Messung geeicht. Dazu wird eine Referenzrichtung ausgewählt, die beispielsweise von der Orientierung einer zweiten Walze vorgegeben sein kann. Die Sonde 20 gibt dann als Messergebnis jeweils die Verdrehung in bezüglich dieser Referenzrichtung an. Der Drehwinkel bzgl. der Referenzrichtung wird im Folgenden als "Rollwinkel" bezeichnet, während die Drehwinkel bzgl. der beiden anderen Achsen des Laborkoordinatensystems als "Pitch-Winkel" bzw. als "Yaw-Winkel" bezeichnet werden.

Im Folgenden sei angenommen, dass die Achse 22 der Referenzrichtung entspricht, d.h. die Walze 10 sei exakt in der Referenzrichtung ausgerichtet. Der Rollwinkel gibt dann die Verdrehung der Sonde 20 bezüglich der Achse 22 an. Auch wenn die Walze 10 eine Fehlorientierung aufweist, entspricht dies näherungsweise, d.h. im Rahmen des Fehlermaß f1 und der Fehlorientierung der Walze 10, der Verdrehung der Sonde bezüglich der Achse 24. Somit haben das Koordinatensystem der Sonde 20 und das Laborkoordinatensystem eine Achse näherungsweise gemeinsam, nämlich die Achse des Rollwinkels.

Im Folgenden bezeichnen somit die Begriffe Pitch-, Yaw- bzw. Rollwinkel die momentane bzw. aktuelle Drehung der Messsonde 20 um drei im Laborkoordinatensystem ortsfeste, aufeinander senkrecht stehende Achsen, wobei vor Beginn der Messung eine entsprechende Eichung bezüglich der Referenzrichtung vorgenommen wird.

Die Walze 10 ist um ihre Längsachse 22 drehbar in präziser Weise gelagert. Bei der Walze 10 handelt es sich vorzugsweise um eine Druckwalze einer Druckmaschine bzw. eine Walze in einer Maschine zur Herstellung von Folien, Filmen oder Feinblechen.

Ziel der Messung ist es, die Orientierung der Walze 10, d.h. die Orientierung ihrer Längsachse 22 bzw. 100, bezüglich einer Referenzrichtung im Laborkoordinatensystem, die im Bezugssystem einer Fabrikhalle, in welcher die Walze aufgestellt ist, beispielsweise von der Orientierung einer anderen Walze definiert ist, zu bestimmen, wobei beispielsweise als Messergebnis die horizontale und die vertikale Winkelabweichung bezüglich der vorgegebenen Referenzrichtung erhalten werden soll. Grundsätzlich könnte, unter der Annahme idealer Anlageflächen, das gewünschte Ergebnis aus einer einzigen Messung mittels der Lagemesssonde 20 erhalten werden, indem z.B. als Eichung für den Pitch-Winkel bzw. Yaw-Winkel eine horizontale bzw. vertikale Ebene im Bezugskoordinatensystem verwendet wird. Aufgrund der in Fig. 1 übertrieben dargestellten Fehlorientierung der Sonde 20 würde sich jedoch bei Vornahme nur einer einzigen Messung ein inakzeptabel großer systematischer Messfehler ergeben (die Sondenachse 200 weicht in vertikaler Richtung von der Walzenachse 100 ab, obwohl letztere exakt horizontal ausgerichtet ist).

Erfindungsgemäß wird dieser systematische Messfehler nun dadurch verringert bzw. eliminiert, dass mindestens drei Messungen bei verschiedenen Drehwinkeln der Walze 10 vorgenommen werden und die Ergebnisse der in unterschiedlicher Winkelstellung vorgenommenen Messungen ausgewertet werden, um das Endergebnis der Lagemessung zu ermitteln. Zu diesem Zweck wird die Walze 10 mit der daran befestigten Messsonde 20 in Drehung um ihre Achse 22 versetzt, wobei dann in verschiedenen Drehstellungen der Walze 10 Messungen des Rollwinkels, des Pitch-Winkels, sowie des Yaw-Winkels vorgenommen werden. Der gemessene Rollwinkel entspricht dabei in der Regel mit hinreichender Genauigkeit dem Drehwinkel der Walze 10 und damit der Sonde 20 um die Achse 22.

Am einfachsten kann die Auswertung der Messwerte erfolgen, wenn Messungen in vier um jeweils 90° verdrehte Messstellungen vorgenommen werden, wobei die von der Sonde 20 gemessenen Werte des Pitch-Winkels und des Yaw-Winkels jeweils einer Mittelwertbestimmung zugeführt werden, deren Ergebnis in relativ präziser Weise die wahre Orientierung der Walze 10 wiedergibt. Dies kann anschaulich so verstanden werden, dass der aus der Fehlorientierung der Messsonde 20 bezüglich der Stirnfläche 12 resultierende systematische Fehler in Vektorform dargestellt werden kann und in Abhängigkeit vom Drehwinkel kegelförmig um die wahre Orientierung der zu vermessenden Walze verteilt ist. Die Symmetrieeigenschaften des zugehörigen Kegels werden dazu herangezogen, die wahre winkelmäßige Orientierung der Walze 10 im Raum zu ermitteln. Dabei kann man annehmen, dass die Symmetrieachse des genannten Kegels der Fehlerverteilung die wahre Orientierung der Walze 10 wiedergibt. Dies ist anschaulich in Fig. 1 zu sehen, wo mit dem Bezugszeichen 200" die relative Orientierung der in Fig. 1 mit 200 bezeichneten Längsachse 24 der Sonde 20 in einer Stellung bezeichnet ist, in welcher die Walze 10 und damit die Sonde 20 bezüglich der in Fig. 1 dargestellten Stellung um 180° verdreht sind. Die wahre Orientierung der Achse 22 der Walze 10, die mit dem Bezugszeichen 100 bezeichnet ist, liegt genau in der Mitte zwischen den beiden Richtungen 200 und 200".

Wenn Messungen in vier verschiedenen Messstellungen vorgenommen werden, zwischen welchen die Walze 10 jeweils um 90° weitergedreht wird, kann durch Mitteln der Ergebnisse der Messstellungen, die sich um 180° unterscheiden, der gewünschte Winkelversatz der Walzenachse in horizontaler bzw. vertikaler Richtung bezüglich der Referenzrichtung bestimmt werden.

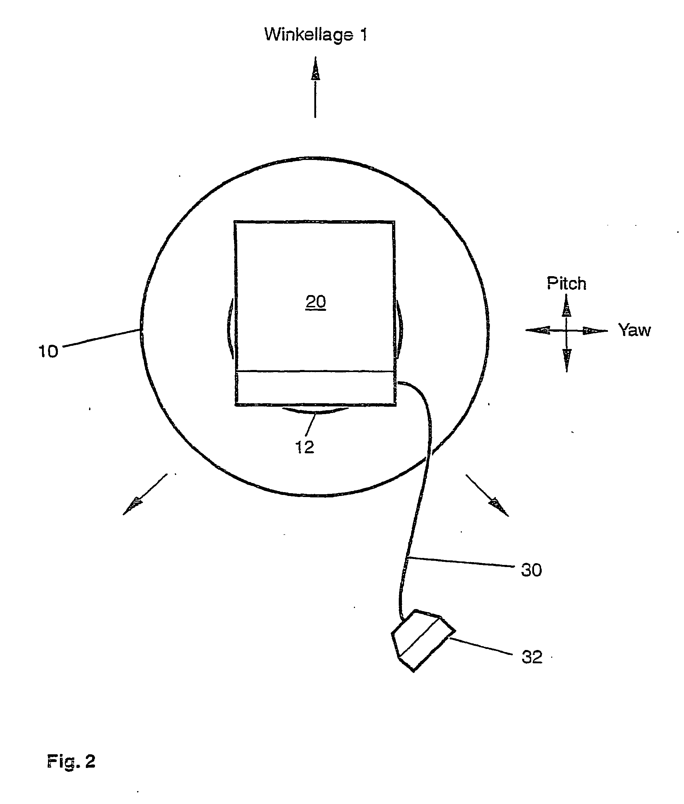

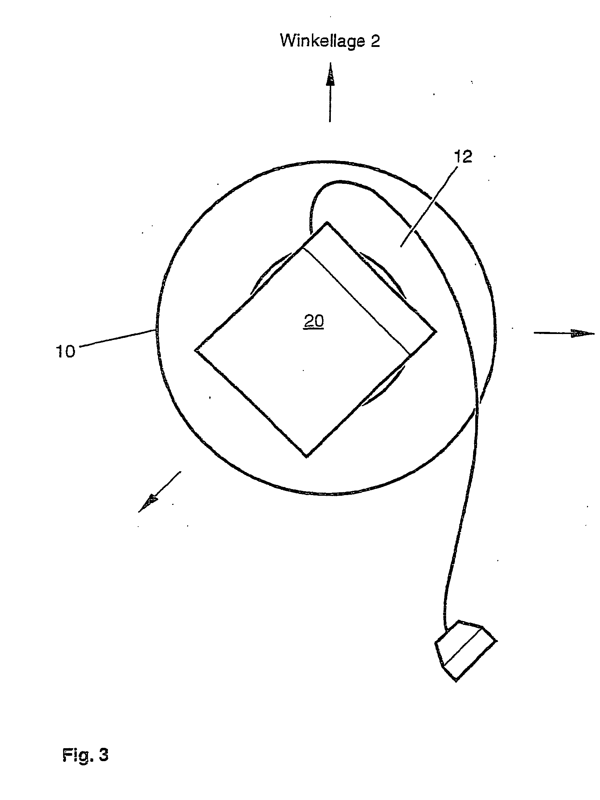

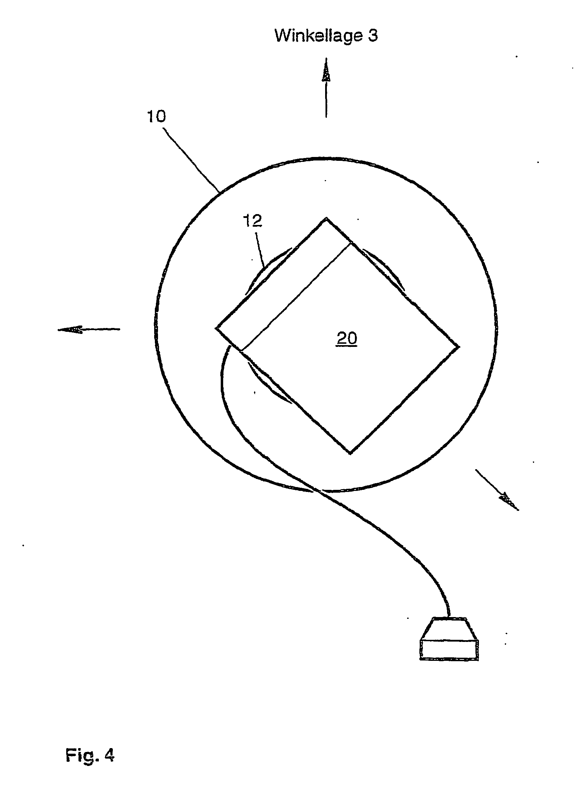

In den Fign. 2 bis 4 ist beispielhaft ein Messvorgang dargestellt, bei welchem Messungen in drei unterschiedlichen Messstellungen vorgenommen werden, wobei jede Figur eine andere der Messstellungen zeigt. Die Lagemesssonde 20 wird dabei vor Beginn der Messungen auf die Stirnfläche 12 aufgesetzt und während der Messungen mittels des Magneten 18 fest an Ort und Stelle gehalten.

In den Fig. 2 bis 4 ist außerdem zu erkennen, dass die Lagemesssonde mittels eines flexiblen Verbindungskabels 30 über eine Schnittstelle (Stecker) 32 mit einer Auswerte- und Ausgabeeinheit (in den Figuren nicht dargestellt) verbunden ist. Mit den Pfeilen ist in den Figuren 2 bis 4 das Bezugssystem der Lagemesssonde 20 (d.h. das Laborkoordinatensystem) angedeutet, welches bei der Drehung ortsfest bleibt.

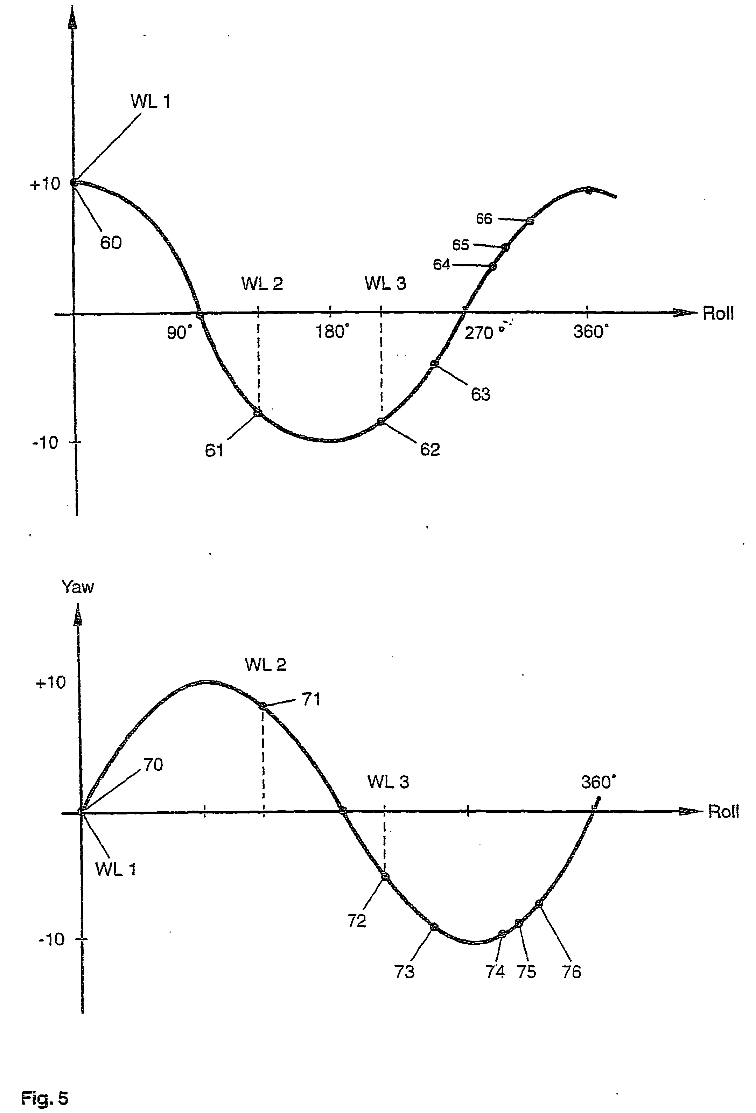

In Fig. 5 ist eine beispielhafte Auswertung von Messergebnissen gezeigt, wobei der von der Sonde 14 gemessene Pitch-Winkel und Yaw-Winkel über dem von der Sonde gemessene Rollwinkel aufgetragen ist. Die in den in Fig. 2 bis 4 gezeigten Messstellungen erhaltenen Ergebnisse sind in Fig. 5 mit den Bezugszeichen 60, 61 und 62 für den Pitch-Winkel und 70, 71 und 72 für den Yaw-Winkel bezeichnet. Bei der Auswertung der Messergebnisse nutzt man die Tatsache, dass bei einer Drehung der Walze 10 bei mit einem Fehlmaß angesetzter Lagemesssonde 20 der von der Lagemesssonde 20 erfasste Pitch-Winkel bzw. Yaw-Winkel in Abhängigkeit von dem erfassten Rollwinkel sinusartig bzw. kosinusartig um den "wahren" Wert, d.h. die horizontale bzw. vertikale Fehlorientierung der Walzenachse 22 bzw. 100 oszilliert. Diese Näherung gilt für kleine Fehlorientierungen der Messsondenachse bezüglich der Walzenachse 22. Aus der Kenntnis der Sinus- bzw. Kosinusfunktion kann somit in einfacher Weise der Mittelwert des Pitch-Winkels bzw. Yaw-Winkels und somit die vertikale bzw. horizontale Fehlorientierung der Walzenachse 22 bezüglich der Referenzrichtung festgestellt werden. Bei dem in Fig. 5 dargestellten Beispiel beträgt der Mittelwert sowohl für den Pitch-Winkel als auch den Yaw-Winkel null, d.h. die Walzenachse 22 zeigt keine Fehlorientierung bezüglich der Referenzrichtung. Die in Fig. 5 gezeigte Darstellung entspricht der Tatsache, dass die Längsachse 24 der Sonde 20 bei einer Drehung der Walze 10 um ihre Achse 22 auf einem Kegelmantel umläuft.

Im allgemeinen Fall ist eine Sinuskurve bzw. Kosinuskurve durch drei Punkte eindeutig bestimmt. Insofern ist eine Messung des Pitch-Winkels bzw. Yaw-Winkels bei drei verschiedenen Rollwinkeln d.h. in drei verschiedenen Drehstellungen der Walze 10, ausreichend, um den wahren Pitch-Winkel und Yaw-Winkel durch die Bestimmung der durch die Messpunkte festgelegten Sinus- bzw. Kosinusfunktion zu bestimmen. Eine höhere Genauigkeit kann natürlich erzielt werden, wenn mehr Messpunkte zur Verfügung stehen. Dies ist Fig. 5 durch die Messpunkte 63 bis 66 bzw. 73 bis 76 angedeutet. Bei Vorliegen von mehr als drei Messwerten wird die zugehörige Sinus- bzw. Kosinusfunktion dann mittels einer Ausgleichsrechnung bestimmt, wobei beispielsweise das Quadrat der Abweichungen minimiert werden kann.

Zur Erzielung einer guten Messgenauigkeit ist es erforderlich, dass die Messungen in den einzelnen Messstellungen innerhalb einer relativ kurzen Zeitspanne erfolgen, damit die Eichung der Lagemesssonde 20 nicht verloren geht. Wenn eine hohe Präzision der Messung gewünscht ist, ist es erforderlich, in bekannter Weise die Erdrotation zu berücksichtigen.

## Patentansprüche

1. Verfahren zum Ermitteln der Ausrichtung eines um seine Längsachse (22) drehbar gelagerten Körpers (10) bezüglich einer Referenzrichtung, wobei eine Lagemesssonde (20), die auf die Referenzrichtung geeicht ist, auf einer Stirnfläche (12) des Körpers (10) oder auf einer zu der Stirnfläche (12) im wesentlichen parallelen Fläche befestigt wird, in mindestens drei Messstellungen, die sich jeweils durch den Rotationswinkel des Körpers (10) um die Körperlängsachse (22) voneinander unterscheiden, jeweils eine Lagemessung durchgeführt wird, und aus den ermittelten Messdaten die Ausrichtung des Körpers (10) bezüglich der Referenzrichtung errechnet wird.

2. Verfahren nach Anspruch 1, **dadurch gekennzeichnet, dass** sich die Messstellungen im wesentlichen gleichmäßig über einen Bereich des Rotationswinkels von 360° verteilen.

3. Verfahren nach Anspruch 2, **dadurch gekennzeichnet, dass** vier Messstellungen vorgesehen sind, zwischen denen die Rotationswinkeldifferenz jeweils etwa 90 Grad beträgt.

4. Verfahren nach Anspruch 1 bis 3, **dadurch gekennzeichnet, dass** die Ausrichtung des Körpers (10) durch die Anwendung von Optimierungsverfahren, insbesondere Kurvenanpassung bzw. Ausgleichsrechnung, aus den Messdaten ermittelt wird.

5. Verfahren nach Anspruch 4, **dadurch gekennzeichnet, dass** aus den Messdaten durch Anwendung von Optimierungsverfahren, insbesondere Kurvenanpassung bzw. Ausgleichsrechnung, der geometrische Ort ermittelt wird, auf dem die Messdaten bei kontinuierlicher Messung über einen Rotationswinkel von 360 Grad liegen würden und aus den Parametern des so ermittelten geometrischen Orts die Ausrichtung des Körpers (10) ermittelt wird.

6. Verfahren nach Anspruch 1 bis 5, **dadurch gekennzeichnet, dass** die Lagemesssonde (20) ihre Drehung um drei im Koordinatensystem der Lagerung des Körpers (10) ortsfeste, aufeinander im wesentlichen senkrecht stehende Achsen (24) als Pitch-, Yaw- bzw. Rollwinkel bzgl. der Referenzrichtung erfasst, wobei die Lagemesssonde (20) in den Messpositionen so an dem Körper (10) befestigt wird, dass der Roll-Winkel im wesentlichen die Drehung der Lagemesssonde (20) um eine zu der Körperachse (22) annähernd parallele Achse angibt.

7. Verfahren nach Anspruch 6, **dadurch gekennzeichnet, dass** in jeder Messstellung der zugehörige Rotationswinkel als der von der Lagemesssonde (20) erfasste Roll-Winkel angenommen wird.

8. Verfahren nach einem der vorhergehenden Ansprüche, **dadurch gekennzeichnet, dass** die Lagemesssonde (20) mindestens einen optischen Kreisel enthält.

9. Verfahren nach einem der vorhergehenden Ansprüche, **dadurch gekennzeichnet, dass** die Lagemesssonde (20) mittels magnetischer Kräfte an der Stirnfläche (12) des Körpers (10) oder der einer dazu im wesentlichen Fläche befestigt wird.

10. Vorrichtung zum Ermitteln der Ausrichtung eines um seine Längsachse (22) drehbar gelagerten zylindrischen Körpers (10) bezüglich einer Referenzrichtung, mit einer Lagemesssonde (20), die auf die Referenzrichtung geeicht ist, einer Einrichtung (18) zum Befestigen der Lagemesssonde (20) auf einer Stirnfläche (12) des zylindrischen Körpers (10) oder auf einer zu der Stirnfläche (12) im wesentlichen parallelen Fläche, sowie einer Auswerteeinheit, die so ausgebildet ist, dass sie aus aus Lagemessungen in mindestens drei Messstellungen, die sich jeweils durch den Rotationswinkel des Körpers (10) um die Körperlängsachse (22) voneinander unterscheiden, ermittelten Messdaten die Ausrichtung des Körpers (10) bezüglich der Referenzrichtung errechnet.

11. Vorrichtung nach Anspruch 10, **dadurch gekennzeichnet, dass** die Befestigungseinrichtung (18) so ausgebildet ist, dass die Befestigung der Lagemesssonde (20) an der Stirnfläche (12) des Körpers (10) oder einer dazu im wesentlichen parallelen Fläche mittels magnetischer Kräfte erfolgt.

12. Vorrichtung nach Anspruch 11, **dadurch gekennzeichnet, dass** die Befestigungseinrichtung (18) als Magnetfuß oder Magnetadapter ausgebildet ist.

13. Vorrichtung nach Anspruch 12, **dadurch gekennzeichnet, dass** die Befestigungseinrichtung einen innerhalb des Gehäuses der Lagemesssonde (20) angeordneten Permanentmagneten (18), vorzugsweise aus Neodym-Eisen-Bor-Werkstoff, umfasst.

14. Vorrichtung nach Anspruch 11, **dadurch gekennzeichnet, dass** die Befestigungseinrichtung zum Zusammenwirken mit einem körperseitigen Magneten ausgebildet ist.

15. Vorrichtung nach Anspruch 10 bis 14, **dadurch gekennzeichnet, dass** die Lagemesssonde (20) mindestens einen optischen Kreisel enthält.

## Claims

1. Method for determination of the alignment of a body (10), which is mounted such that it can rotate about its longitudinal axis (22), with respect to a reference direction, with an orientation measurement probe (20), which is calibrated to the reference direction, being mounted on an end surface (12) of the body (10) or on a surface which is essentially parallel to the end surface (12), in at least three measurement positions which each differ from one another by the rotation angle of the body (10) about the body longitudinal axis (22), an orientation measurement is in each case carried out, and the alignment of the body (10) with respect to the reference direction is calculated from the determined measurement data.

2. Method according to Claim 1, **characterized in that** the measurement positions are distributed essentially uniformly over a 360° range of the rotation angle.

3. Method according to Claim 2, **characterized in that** four measurement positions are provided, between each of which the rotation angle difference is approximately 90 degrees.

4. Method according to Claims 1 to 3, **characterized in that** the alignment of the body (10) is determined from the measurement data by use of optimization methods, in particular curve matching or a regression calculation.

5. Method according to Claim 4, **characterized in that** the geometric locus on which the measurement data would lie if a continuous measurement were carried out over a rotation angle of 360 degrees is determined from the measurement data by use of optimization methods, in particular curve matching or a regression calculation, and the alignment of the body (10) is determined from the parameters of the geometric locus determined in this way.

6. Method according to Claims 1 to 5, **characterized in that** the orientation measurement probe (20) detects its rotation about three axes (24) which are essentially at right angles to one another and are fixed in position in the coordinate system of the bearing for the body (10), as pitch, yaw and roll angles with respect to the reference direction, with the orientation measurement probe (20) being attached to the body (10) in the measurement positions such that the roll angle essentially indicates the rotation of the orientation measurement probe (20) about an axis which is approximately parallel to the body axis (22).

7. Method according to Claim 6, **characterized in that**, in each measurement position, the associated rotation angle is assumed to be the roll angle as detected by the orientation measurement probe (20).

8. Method according to one of the preceding claims, **characterized in that** the orientation measurement probe (20) contains at least one optical gyroscope.

9. Method according to one of the preceding claims, **characterized in that** the orientation measurement probe (20) is attached by means of magnetic forces to the end surface (12) of the body (10) or to a surface which is essentially parallel to it.

10. Apparatus for determination of the alignment of a cylindrical body (10), which is mounted such that it can rotate about its longitudinal axis (22), with respect to a reference direction, having an orientation measurement probe (20) which is calibrated to the reference direction, having a device (18) for mounting the orientation measurement probe (20) on an end surface (12) of the cylindrical body (10) or on a surface which is essentially parallel to the end surface (12), and having an evaluation unit which is designed such that it calculates the alignment of the body (10) with respect to the reference direction from measurement data which is determined from orientation measurements in at least three measurement positions which differ from one another by the rotation angle of the body (10) about the body longitudinal axis (22).

11. Apparatus according to Claim 10, **characterized in that** the attachment device (18) is designed such that the orientation measurement probe (20) is attached by means of magnetic forces to the end surface (12) of the body (10) or to a surface which is essentially parallel to it.

12. Apparatus according to Claim 11, **characterized in that** the attachment device (18) is in the form of a magnet foot or magnet adapter.

13. Apparatus according to Claim 12, **characterized in that** the attachment device comprises a permanent magnet (18), which is arranged within the housing of the orientation measurement probe (20) and is preferably composed of neodymium/iron/boron material.

14. Apparatus according to Claim 11, **characterized in that** the attachment device is designed to interact with a magnet on the body side.

15. Apparatus according to Claims 10 to 14, **characterized in that** the orientation measurement probe (20) contains at least one optical gyroscope.

## Revendications

1. Procédé pour déterminer l'orientation d'un corps (10) tournant sur palier autour de son axe longitudinal (22) par rapport à une direction de référence, dans lequel on fixe une sonde de mesure de position (20), qui est étalonnée sur la direction de référence, sur une face frontale (12) du corps (10) ou sur une face sensiblement parallèle à la face frontale (12), on effectue chaque fois une mesure de position dans au moins trois positions de mesure, qui diffèrent l'une de l'autre par l'angle de rotation du corps (10) autour de l'axe longitudinal (22) du corps, et on calcule l'orientation du corps (10) par rapport à la direction de référence à partir des données de mesure déterminées.

2. Procédé selon la revendication 1, **caractérisé en ce que** les positions de mesure se répartissent d'une façon sensiblement uniforme sur une plage de l'angle de rotation de 360°.

3. Procédé selon la revendication 2, **caractérisé en ce qu'**il est prévu quatre positions de mesure, entre lesquelles la différence de l'angle de rotation est chaque fois d'environ 90 degrés.

4. Procédé selon l'une quelconque des revendications 1 à 3, **caractérisé en ce que** l'on détermine à partir des données de mesure l'orientation du corps (10) par l'application de procédés d'optimisation, en particulier par ajustement des courbes respectivement par calcul de compensation.

5. Procédé selon la revendication 4, **caractérisé en ce que** l'on détermine à partir des données de mesure, par l'application de procédés d'optimisation, en particulier par ajustement des courbes respectivement par calcul de compensation, le lieu géométrique sur lequel les données de mesure se situeraient lors d'une mesure continue sur un angle de rotation de 360 degrés et **en ce que** l'on détermine l'orientation du corps (10) à partir des paramètres du lieu géométrique ainsi déterminé.

6. Procédé selon l'une quelconque des revendications 1 à 5, **caractérisé en ce que** la sonde de mesure de position (20) détecte sa rotation autour de trois axes (24) sensiblement perpendiculaires l'un à l'autre fixes dans le système de coordonnées du palier du corps (10), comme angle d'inclinaison, de lacet ou de roulis par rapport à la direction de référence, la sonde de mesure de position (20) étant fixée dans les positions de mesure sur le corps (10) de telle façon que l'angle de roulis indique sensiblement la rotation de la sonde de mesure de position (20) autour d'un axe approximativement parallèle à l'axe du corps (22).

7. Procédé selon la revendication 6, **caractérisé en ce que** l'on considère, dans chaque position de mesure, l'angle de rotation correspondant comme étant l'angle de roulis détecté par la sonde de mesure de position (20).

8. Procédé selon l'une quelconque des revendications précédentes, **caractérisé en ce que** la sonde de mesure de position (20) contient au moins un gyroscope optique.

9. Procédé selon l'une quelconque des revendications précédentes, **caractérisé en ce que** la sonde de mesure de position (20) est fixée au moyen de forces magnétiques sur la face frontale (12) du corps (10) ou sur la face sensiblement parallèle à celle-ci.

10. Dispositif pour déterminer l'orientation d'un corps cylindrique (10) tournant sur palier autour de son axe longitudinal (22) par rapport à une direction de référence, avec une sonde de mesure de position (20), qui est étalonnée sur la direction de référence, avec un dispositif (18) pour fixer la sonde de mesure de position (20) sur une face frontale (12) du corps cylindrique (10) ou sur une face sensiblement parallèle à la face frontale (12), ainsi qu'avec une unité d'exploitation, qui est configurée de telle façon qu'elle calcule l'orientation du corps (10) par rapport à la direction de référence à partir des données de mesure déterminées à partir de mesures de position dans au moins trois positions de mesure, qui diffèrent l'une de l'autre chaque fois par l'angle de rotation du corps (10) autour de l'axe longitudinal du corps (22).

11. Dispositif selon la revendication 10, **caractérisé en ce que** le dispositif de fixation (18) est réalisé de telle façon que la fixation de la sonde de mesure de position (20) sur la face frontale (12) du corps (10) ou sur une face sensiblement parallèle à celle-ci est effectuée au moyen de forces magnétiques.

12. Dispositif selon la revendication 11, **caractérisé en ce que** le dispositif de fixation (18) est réalisé sous la forme d'un pied magnétique ou d'un adaptateur magnétique.

13. Dispositif selon la revendication 12, **caractérisé en ce que** le dispositif de fixation comprend un aimant permanent (18), de préférence en une matière néodyme-fer-bore, disposé à l'intérieur du boîtier de la sonde de mesure de position (20).

14. Dispositif selon la revendication 11, **caractérisé en ce que** le dispositif de fixation est configuré de façon à coopérer avec un aimant du côté du corps.

15. Dispositif selon l'une quelconque des revendications 10 à 14, **caractérisé en ce que** la sonde de mesure de position (20) contient au moins un gyroscope optique.
